# EUROPEAN PATENT APPLICATION

(11) **EP 4 564 079 A1**
(43) Date of publication of application: **04.06.2025**
(21) Application number: 23846035.6
(22) Date of filing: 09.06.2023
(51) Int. Cl.: G02B 26/10, G01S 7/481, G02B 26/08

(54) **OPTICAL SCANNING DEVICE**

(30) Priority: 27.07.2022 JP 2022120028
(71) Applicant: FUJIFILM Corporation, Tokyo 106-8620 (JP)
(72) Inventor: NAKABAYASHI, Koki, Ashigarakami-gun, Kanagawa 258-8577 (JP)
(74) Representative: Meissner Bolte Partnerschaft mbB
(86) International application number: PCT/JP2023/021603
(87) International publication number: WO 2024/024299

(57) **Abstract**

An optical scanning device includes a rotary light-projecting element that is rotatable about a rotation axis and that emits incidence light in different directions, a rotary drive device that rotates the rotary light-projecting element, a light deflection device that deflects incidence light from a light source into a plane including the rotation axis and that causes the deflected light to be incident on the rotary light-projecting element, and a control device that controls the rotary drive device so that a normal line of a light projection emitting surface through which light is emitted from the rotary light-projecting element is included in the plane.

## Description

### BACKGROUND OF THE INVENTION

### 1. Field of the Invention

The technology of the present disclosure relates to an optical scanning device.

### 2. Description of the Related Art

As an optical scanning device that can perform scanning with light such as laser light, a rotating laser device, a light detection and ranging (LiDAR) device, and the like are known.

As a scanning method used in these optical scanning devices, a mechanical method of deflecting light using a mechanically rotating mirror or the like is known (for example, see US2017/0269198A or JP2002-039755A). In addition, a MEMS method of deflecting light using a movable mirror (also referred to as a MEMS mirror) composed of micro electro mechanical systems (MEMS) is known in addition to the mechanical method (for example, see research paper "Resonant biaxial 7-mm MEMS mirror for omnidirectional scanning, J. Micro/Nanolith. MEMS MOEMS 13(1), 011103 (Jan-Mar 2014)"). In addition, a combination method of the mechanical method and the MEMS method is known (for example, see JP2014-109686A).

In such an optical scanning device, it is desired to enable three-dimensional optical scanning including not only a horizontal direction but also a vertical direction orthogonal to the horizontal direction.

### SUMMARY OF THE INVENTION

The device disclosed in US2017/0269198A can perform three-dimensional optical scanning by mechanically rotating a light-projecting element in three dimensions. However, in the device disclosed in US2017/0269198A, a rotary transformer is used for electrical connection between the light-projecting element and a drive device, which causes a problem in that the device is increased in size and heavy.

The device disclosed in the above research paper is configured using a MEMS mirror that swings in two axial directions and an omnidirectional optical system, and can perform optical scanning in all directions. However, the device disclosed in the above paper has a problem in that a beam divergence angle is large and sufficient optical performance cannot be obtained. In addition, the above research paper does not propose to perform three-dimensional optical scanning.

The device disclosed in JP2014-109686A can perform three-dimensional optical scanning by rotating a MEMS mirror that swings in one axial direction. However, the device disclosed in JP2014-109686A is provided with a noncontact power feed unit to supply power to the rotating MEMS mirror, which causes a problem in that the device is increased in size.

The device disclosed in JP2002-039755A can perform optical scanning in all directions by rotating a pentaprism. The device disclosed in JP2002-039755A does not comprise a noncontact power feed unit or the like, but does not perform three-dimensional optical scanning.

As described above, the mechanical method has advantages in that a degree of freedom in designing a rotation mechanism for rotating the optical system is high and the beam divergence angle is small, but has a problem in that the device is increased in size. In addition, the MEMS method is advantageous in terms of miniaturizing the device because it does not require a rotation mechanism, but the degree of freedom in designing the optical system is low, making it difficult to reduce the beam divergence angle.

An object of the technology of the present disclosure is to provide an optical scanning device that has a small size and is capable of performing three-dimensional optical scanning.

In order to achieve the above object, there is provided an optical scanning device comprising: a rotary light-projecting element that is rotatable about a rotation axis and that emits incidence light in different directions; a rotary drive device that rotates the rotary light-projecting element; a light deflection device that deflects incidence light from a light source into a plane including the rotation axis and that causes the deflected light to be incident on the rotary light-projecting element; and a control device that controls the rotary drive device so that a normal line of a light projection emitting surface through which light is emitted from the rotary light-projecting element is included in the plane.

It is preferable that the rotary light-projecting element is a rotary light-projecting mirror, and that the light projection emitting surface is a reflecting surface that is inclined with respect to the rotation axis and that reflects and emits the deflected light incident from the light deflection device.

It is preferable that the rotary light-projecting element is a pentaprism, and that the light projection emitting surface is a light emitting surface that emits light incident from a light incident surface and deflected by reflection in the pentaprism.

It is preferable that the light deflection device includes a two-axis scanner mirror whose normal direction swings, and that a normal line of the light projection emitting surface and a normal line of the two-axis scanner mirror are in the plane.

It is preferable that the light deflection device includes a beam splitter that reflects the incidence light from the light source and causes the reflected light to be incident on the two-axis scanner mirror and that allows light reflected by the two-axis scanner mirror to pass therethrough and causes the reflected light to be incident on the rotary light-projecting element as the deflected light.

It is preferable that the two-axis scanner mirror is inclined with respect to the rotation axis, reflects the incidence light from the light source, and causes the reflected light to be incident on the rotary light-projecting element as the deflected light.

It is preferable that the optical scanning device further comprises: a light-receiving element that receives return light which is emitted from the rotary light-projecting element to an outside of the device and returns by being reflected by an object.

It is preferable that the optical scanning device further comprises: a holed mirror having a hole through which the incidence light from the light source passes and is incident on the light deflection device, and that the light-receiving element receives the return light reflected around the holed mirror.

It is preferable that the rotary drive device is a hollow motor having a through hole and is disposed between the rotary light-projecting element and the light deflection device, and that the deflected light emitted from the light deflection device passes through the through hole and is incident on the rotary light-projecting element.

It is preferable that the optical scanning device further comprises: a rotary light-receiving element that has a reflecting surface inclined with respect to the rotation axis and that rotates about the rotation axis together with the rotary light-projecting element; and a light-receiving element that receives return light which is emitted from the rotary light-projecting element to an outside of the device, returns by being reflected by an object, and then is reflected by the rotary light-receiving element.

It is preferable that the rotary drive device is a double-axis motor having a first drive shaft and a second drive shaft extending along the rotation axis, the rotary light-projecting element is connected to the first drive shaft, and the rotary light-receiving element is connected to the second drive shaft.

It is preferable that the light deflection device is composed of a one-axis scanner mirror whose normal direction swings in a direction orthogonal to the rotation axis, an image rotator prism that rotates a direction of light reflected by the one-axis scanner mirror about the rotation axis, and a hollow motor that has a through hole in which the image rotator prism is disposed and that rotates the image rotator prism about the rotation axis.

According to the technology of the present disclosure, it is possible to provide an optical scanning device that has a small size and is capable of performing three-dimensional optical scanning.

### BRIEF DESCRIPTION OF THE DRAWINGS

Fig. 1 is a perspective view showing a schematic configuration of an optical scanning device according to a first embodiment.
Fig. 2 is a perspective view showing an example of a schematic configuration of a movable mirror device.
Fig. 3 is a diagram showing a state in which a movable mirror precesses.
Fig. 4 is a diagram showing an example of a change over time in a normal direction in a case in which scanning with laser light is performed in the entire circumferential direction with a vertical angle of +2α.
Fig. 5 is a diagram showing a definition of an angle around an axis.
Fig. 6 is a diagram showing an example of a change over time in a normal direction in a case in which scanning with laser light is performed in the entire circumferential direction with a vertical angle of -2α.
Fig. 7 is a perspective view showing an optical scanning device that performs scanning with laser light in the entire circumferential direction with a vertical angle of -2α.
Fig. 8 is a diagram showing an example of a change over time in a normal direction in a case in which reciprocating scanning with laser light is performed in a vertical direction.
Fig. 9 is a perspective view showing an optical scanning device that performs reciprocating scanning with laser light in a vertical direction.
Fig. 10 is a diagram showing an example of a change over time in a normal direction in a case of performing reciprocating scanning with laser light in a vertical direction while performing scanning with the laser light in the entire circumferential direction.
Fig. 11 is a perspective view showing an optical scanning device that performs reciprocating scanning with laser light in a vertical direction while performing scanning with the laser light in the entire circumferential direction.
Fig. 12 is a perspective view showing a schematic configuration of an optical scanning device according to a second embodiment.
Fig. 13 is a perspective view showing the schematic configuration of the optical scanning device according to the second embodiment.
Fig. 14 is a perspective view showing a schematic configuration of an optical scanning device according to a third embodiment.
Fig. 15 is a perspective view showing a schematic configuration of an optical scanning device according to a fourth embodiment.
Fig. 16 is a perspective view showing a schematic configuration of an optical scanning device according to a fifth embodiment.
Fig. 17 is a perspective view showing a schematic configuration of an optical scanning device according to a sixth embodiment.
Fig. 18 shows an example of a change over time in a rotation angle in a case in which scanning with laser light L is performed in the entire circumferential direction.
Fig. 19 is a diagram showing an example of a pentaprism.

### DESCRIPTION OF THE PREFERRED EMBODIMENTS

Various embodiments according to the technology of the present disclosure will be described with reference to the accompanying drawings.

### [First Embodiment]

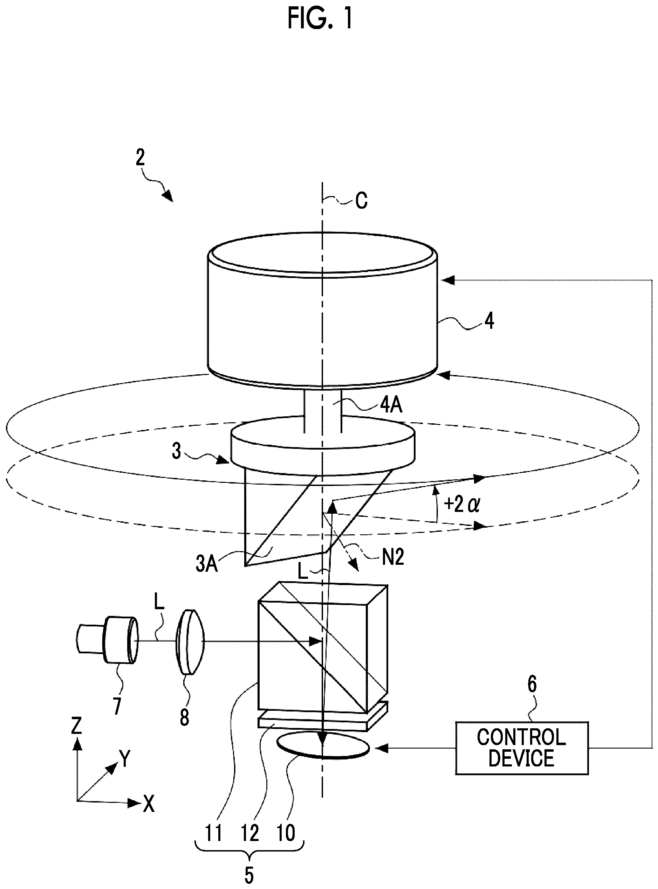

Fig. 1 shows a schematic configuration of an optical scanning device 2 according to a first embodiment. The optical scanning device 2 according to the first embodiment is used as, for example, a rotating laser device.

As shown in Fig. 1, the optical scanning device 2 comprises a rotary light-projecting mirror 3, a motor 4, a light deflection device 5, and a control device 6. The rotary light-projecting mirror 3 is an example of a "rotary light-projecting element" according to the technology of the present disclosure. The motor 4 is an example of a "rotary drive device" according to the technology of the present disclosure.

The rotary light-projecting mirror 3 has a reflecting surface 3A inclined with respect to a rotation axis C, and is rotatable about the rotation axis C. The reflecting surface 3A is inclined at an angle of 45° with respect to the rotation axis C. That is, an angle formed by a normal line N2 of the reflecting surface 3A and the rotation axis C is 45°.

The rotary light-projecting mirror 3 is connected to a drive shaft 4A of the motor 4. The motor 4 drives the rotary light-projecting mirror 3 to rotate the rotary light-projecting mirror 3 about the rotation axis C. The motor 4 is controlled by the control device 6.

Hereinafter, a direction parallel to the rotation axis C is referred to as a Z axis direction, one direction orthogonal to the Z axis direction is referred to as an X axis direction, and a direction orthogonal to the Z axis direction and the X axis direction is referred to as a Y axis direction.

The light deflection device 5 deflects incidence light from a light source 7 and causes the deflected light to be incident on the reflecting surface 3A of the rotary light-projecting mirror 3. The light source 7 is, for example, a laser diode. The light deflection device 5 includes a two-axis scanner mirror 10, a beam splitter 11, and a λ/4 phase difference plate 12. The two-axis scanner mirror 10, the beam splitter 11, and the λ/4 phase difference plate 12 are disposed on the rotation axis C. As the light source 7, various lasers (diode pumped solid state (DPSS) laser, a fiber laser, and the like), light emitting diode (LED), and the like other than the laser diode can be used. Furthermore, as the light source 7, an electromagnetic wave laser (millimeter wave radar or the like) having a longer wavelength can also be applied.

The two-axis scanner mirror 10 is disposed on the rotation axis C at a position facing the reflecting surface 3A of the rotary light-projecting mirror 3. The beam splitter 11 is disposed between the rotary light-projecting mirror 3 and the two-axis scanner mirror 10. The λ/4 phase difference plate 12 is disposed between the beam splitter 11 and the two-axis scanner mirror 10.

Laser light L is incident into the beam splitter 11 from the light source 7 via a collimator lens 8. The beam splitter 11 is a polarized light beam splitter, and the laser light L is incident into the beam splitter 11 as, for example, S-polarized light. The beam splitter 11 reflects the laser light L incident from the light source 7. The laser light L reflected by the beam splitter 11 is incident on the two-axis scanner mirror 10 via the *λ*/*4* phase difference plate 12. The laser light L travels along the rotation axis C and is incident on the two-axis scanner mirror 10. The laser light L is an example of "light" according to the technology of the present disclosure.

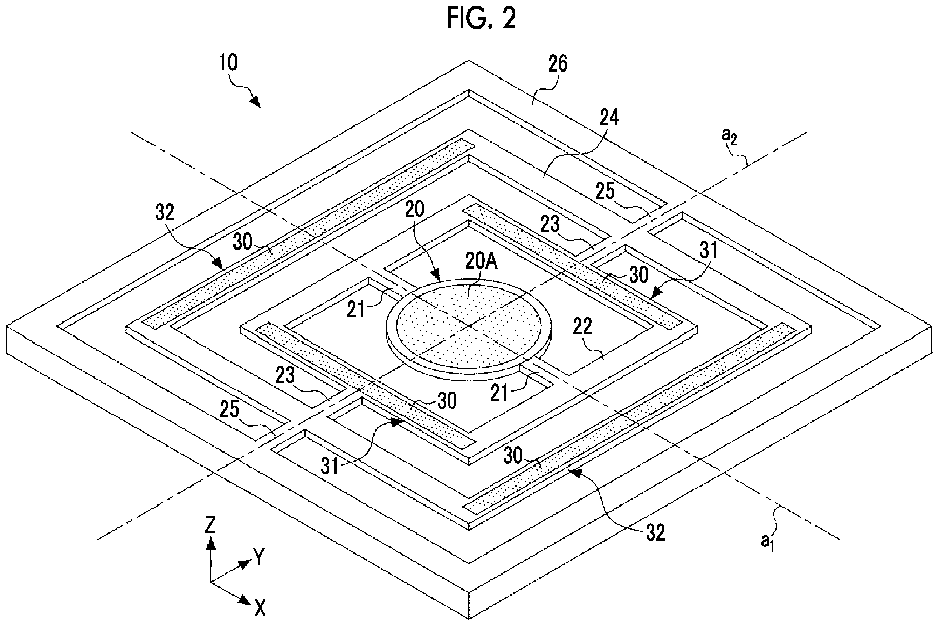

The two-axis scanner mirror 10 reflects the laser light L to deflect the laser light L. Although described in detail below, the control device 6 controls the two-axis scanner mirror 10 so that a movable mirror 20 (see Fig. 2) performs precession at the same period as the rotary light-projecting mirror 3.

The laser light L reflected by the two-axis scanner mirror 10 passes through the λ/4 phase difference plate 12 and is incident into the beam splitter 11 as P-polarized light. Therefore, the laser light L incident into the beam splitter 11 from the two-axis scanner mirror 10 passes through the beam splitter 11 and is incident on the reflecting surface 3A of the rotary light-projecting mirror 3 as deflected light.

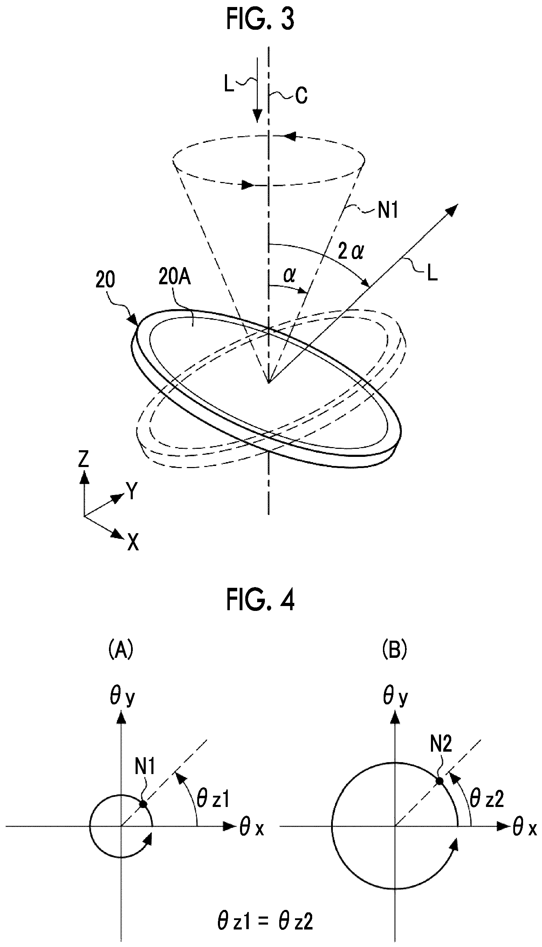

The laser light L incident on the reflecting surface 3A is reflected by the reflecting surface 3A and is emitted in a circumferential direction about the rotation axis C. As the rotary light-projecting mirror 3 rotates, scanning with the laser light L is performed in a way that traces a circular path. In a case in which an angle formed by a direction of a normal line N1 (see Fig. 3) of the two-axis scanner mirror 10 and the rotation axis C is denoted by α, an angle of the laser light L in a vertical direction (Z axis direction) with respect to a horizontal plane (XY plane) (hereinafter, referred to as a vertical angle) is 2α. Therefore, the vertical angle of the laser light L scanned around the rotary light-projecting mirror 3 is determined by the angle of the normal line N1.

The control device 6 controls the operations of the rotary light-projecting mirror 3 and the two-axis scanner mirror 10. The control device 6 is a processor configured of an integrated circuit (IC) or the like. The control device 6 may be a processor that executes processing based on a program.

Fig. 2 shows a schematic configuration of the two-axis scanner mirror 10. The two-axis scanner mirror 10 is a micromirror device formed by etching a silicon on insulator (SOI) substrate.

The two-axis scanner mirror 10 includes a movable mirror 20, first support portions 21, a first movable frame 22, second support portions 23, a second movable frame 24, connecting portions 25, and a fixed frame 26.

The movable mirror 20 has a reflecting surface 20A that reflects incidence light. The reflecting surface 20Ais formed of, for example, a metal thin film, such as gold (Au), aluminum (Al), silver (Ag), or an alloy of silver, provided on one surface of the movable mirror 20. A shape of the reflecting surface 20A is, for example, a circular shape centered on an intersection between an axis a₁ and an axis a₂. For example, the axis a₁ is parallel to the X axis direction, and the axis a₂ is parallel to the Y axis direction.

The first support portions 21 are disposed outside the movable mirror 20 at positions facing each other across the axis a₂. The first support portions 21 are connected to the movable mirror 20 on the axis a₁ and support the movable mirror 20 in a swingable manner around the axis a₁. In the present embodiment, the first support portions 21 are torsion bars extending along the axis a₁.

The first movable frame 22 is a rectangular frame surrounding the movable mirror 20, and is connected to the movable mirror 20 via the first support portions 21 on the axis a₁. Piezoelectric elements 30 are formed on the first movable frame 22 at positions facing each other across the axis a₁. In this way, a pair of first actuators 31 are configured by forming two piezoelectric elements 30 on the first movable frame 22.

The pair of first actuators 31 are disposed at positions facing each other across the axis a₁. The first actuator 31 applies a rotational torque around the axis a₁ to the movable mirror 20, thereby swinging the movable mirror 20 around the axis a₁.

The second support portions 23 are disposed outside the first movable frame 22 at positions facing each other across the axis a₁. The second support portions 23 are connected to the first movable frame 22 on the axis a₂ and support the first movable frame 22 and the movable mirror 20 in a swingable manner around the axis a₂. In the present embodiment, the second support portions 23 are torsion bars extending along the axis a₂.

The second movable frame 24 is a frame having a rectangular shape surrounding the first movable frame 22, and is connected to the first movable frame 22 via the second support portions 23 on the axis a₂. The piezoelectric elements 30 are formed at positions facing each other across the axis a₂ on the second movable frame 24. In this way, a pair of second actuators 32 are configured by forming two piezoelectric elements 30 on the second movable frame 24.

The pair of second actuators 32 are disposed at positions facing each other across the axis a₂. The second actuator 32 applies a rotational torque around the axis a₂ to the movable mirror 20 and the first movable frame 22, thereby swinging the movable mirror 20 around the axis a₂.

The connecting portions 25 are disposed outside the second movable frame 24 at positions facing each other across the axis a₁. The connecting portions 25 are connected to the second movable frame 24 on the axis a₂.

The fixed frame 26 is a frame having a rectangular shape surrounding the second movable frame 24, and is connected to the second movable frame 24 via the connecting portions 25 on the axis a₂.

The pair of first actuators 31 and the pair of second actuators 32 function as a driving unit that drives the movable mirror 20.

In the present embodiment, the control device 6 causes the movable mirror 20 to perform precession by applying sinusoidal drive voltages having different phases to the pair of first actuators 31 and the pair of second actuators 32. In other words, the control device 6 swings the direction of the normal line N1 in a plane including the rotation axis C and the X axis. By swinging the direction of the normal line N1 in the X axis direction and the Y axis direction and setting a phase difference between the two to 90°, the normal line N1 moves in a way that traces a circular path.

Fig. 3 shows a state in which the movable mirror 20 precesses. The precession is a motion in which the normal line N1 of the reflecting surface 20A of the movable mirror 20 is deflected in a way that traces a circular path. That is, the movable mirror 20 rotationally moves in a state in which the direction of the normal line N1 is inclined at an angle α with respect to the rotation axis C. The movable mirror 20 is disposed such that the rotation axis C passes through the center of the movable mirror 20. In the present embodiment, the direction of the normal line N1 in a state in which the movable mirror 20 is not inclined is parallel to the rotation axis C.

The laser light L incident on the two-axis scanner mirror 10 from the beam splitter 11 via the λ/4 phase difference plate 12 is incident on the center of the movable mirror 20 along the rotation axis C. The laser light L that is deflected by the movable mirror 20 performing the precession as shown in Fig. 3 is emitted from the movable mirror 20 in a way that traces a circular path.

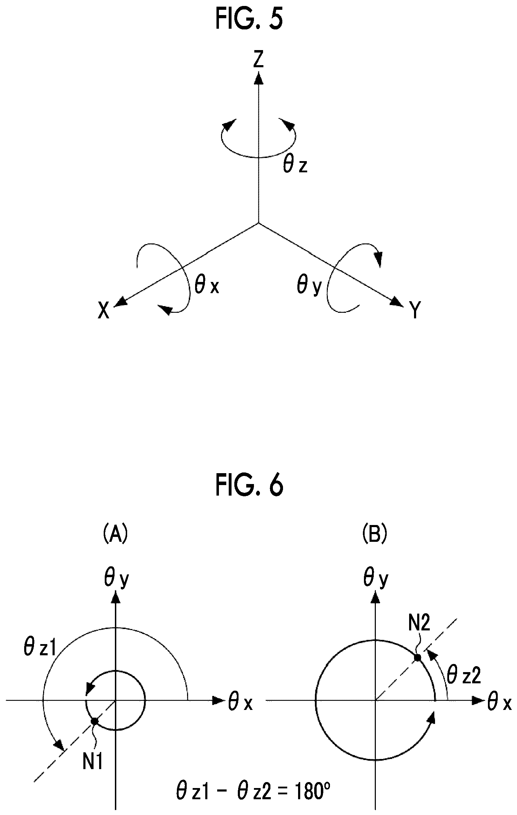

Fig. 4 shows an example of a change over time in the normal direction in a case in which scanning with the laser light L is performed in the entire circumferential direction with a vertical angle of +2α. (A) of Fig. 4 shows a change over time in the normal direction of the two-axis scanner mirror 10. (B) of Fig. 4 shows a change over time in the normal direction of the rotary light-projecting mirror 3. The normal direction of the two-axis scanner mirror 10 refers to a direction of the normal line N1 of the reflecting surface 20A. The normal direction of the rotary light-projecting mirror 3 refers to a direction of the normal line N2 of the reflecting surface 3A. In Fig. 4, the directions of the normal lines N1 and N2 are represented using an angle θx around the X axis, an angle θy around the Y axis, and an angle θz around the Z axis as parameters. Fig. 5 shows definitions of the angles θx, θy, and θz.

In Fig. 4, θz1 and θz2 represent angles θz of the normal lines N1 and N2 at a certain point in time. In addition, a rotation radius of the normal line N1 in Fig. 4 depends on the angle α.

In the example shown in Fig. 4, the control device 6 controls the operations of the rotary light-projecting mirror 3 and the two-axis scanner mirror 10 such that θz1 = θz2 and the angle α is constant. As a result, the movable mirror 20 performs precession with the same period and the same phase as the rotation of the rotary light-projecting mirror 3. Accordingly, the vertical angle of the laser light L scanned around the rotary light-projecting mirror 3 is +2α (see Fig. 1).

Fig. 6 shows an example of a change over time in the normal direction in a case in which scanning with the laser light L is performed in the entire circumferential direction with a vertical angle of -2α. (A) of Fig. 6 shows a change over time in the normal direction of the two-axis scanner mirror 10. (B) of Fig. 6 shows a change over time in the normal direction of the rotary light-projecting mirror 3.

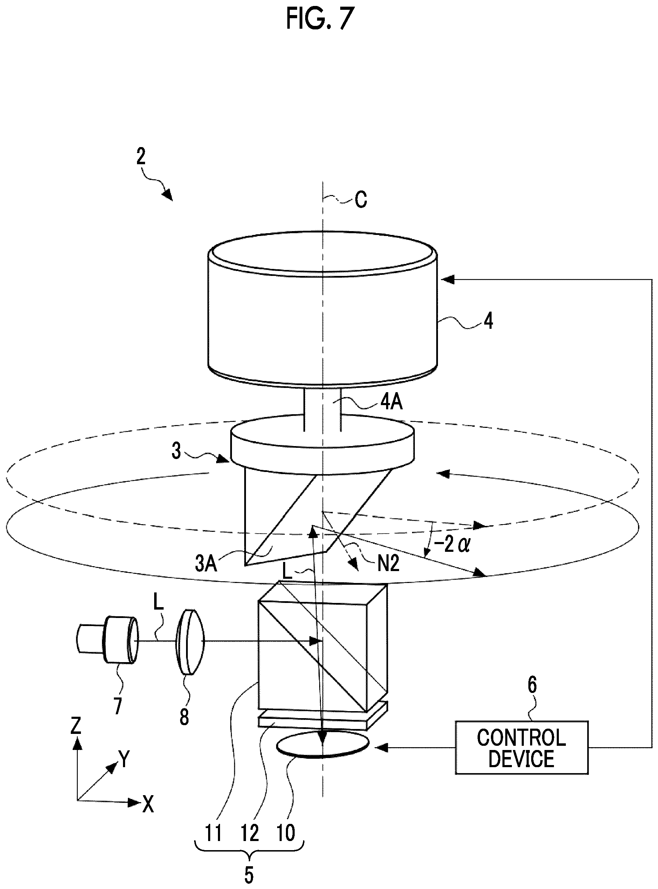

In the example shown in Fig. 6, the control device 6 controls the operations of the rotary light-projecting mirror 3 and the two-axis scanner mirror 10 such that θz1 - θz2 = 180° and the angle α is constant. As a result, the movable mirror 20 performs precession with the same period as the rotation of the rotary light-projecting mirror 3 and in the opposite phase to the rotation of the rotary light-projecting mirror 3. Accordingly, as shown in Fig. 7, the vertical angle of the laser light L scanned around the rotary light-projecting mirror 3 is -2α.

As described above, the control device 6 controls the light deflection device 5 so that the incidence light from the light source 7 is deflected in the plane including the rotation axis C and is incident on the reflecting surface 3A as deflected light. In addition, the control device 6 controls the motor 4 so that the normal line N2 of the reflecting surface 3A is included in the plane. In the present embodiment, the normal line N1 and the normal line N2 are in the plane. That is, the plane includes the rotation axis C, the normal line N1, and the normal line N2.

The optical scanning device 2 of the present embodiment performs scanning by reflecting the laser light L deflected by the light deflection device 5 on the reflecting surface 3A of the rotary light-projecting mirror 3, and thus can perform three-dimensional optical scanning with a small size. In addition, since the optical scanning device 2 performs scanning with the laser light L by reflecting the laser light L on the reflecting surface 3A, a beam divergence angle of the laser light L can be reduced.

Hereinafter, a modification example of the first embodiment will be described. The following modification example is different from the first embodiment only in the scanning method of the laser light L, and the configuration of the optical scanning device 2 is the same as that of the first embodiment.

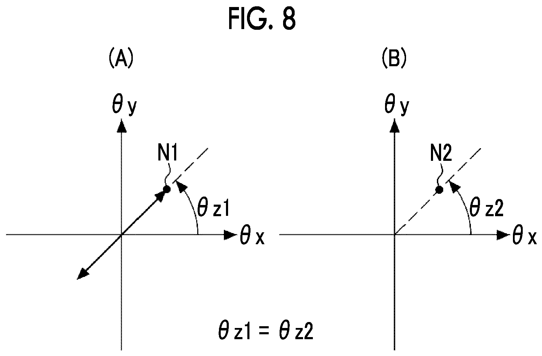

Fig. 8 shows an example of a change over time in the normal direction in a case in which reciprocating scanning with the laser light L is performed in the vertical direction. (A) of Fig. 8 shows a change over time in the normal direction of the two-axis scanner mirror 10. (B) of Fig. 8 shows a change over time in the normal direction of the rotary light-projecting mirror 3.

In the present modification example, the control device 6 controls the two-axis scanner mirror 10 so that the angle formed by the direction of the normal line N1 and the rotation axis C changes within a range of ±α in a state in which the rotation of the rotary light-projecting mirror 3 is stopped and θz1 = θz2. That is, the control device 6 controls the two-axis scanner mirror 10 so that the normal line N1 swings in a plane including the rotation axis C and the normal line N2.

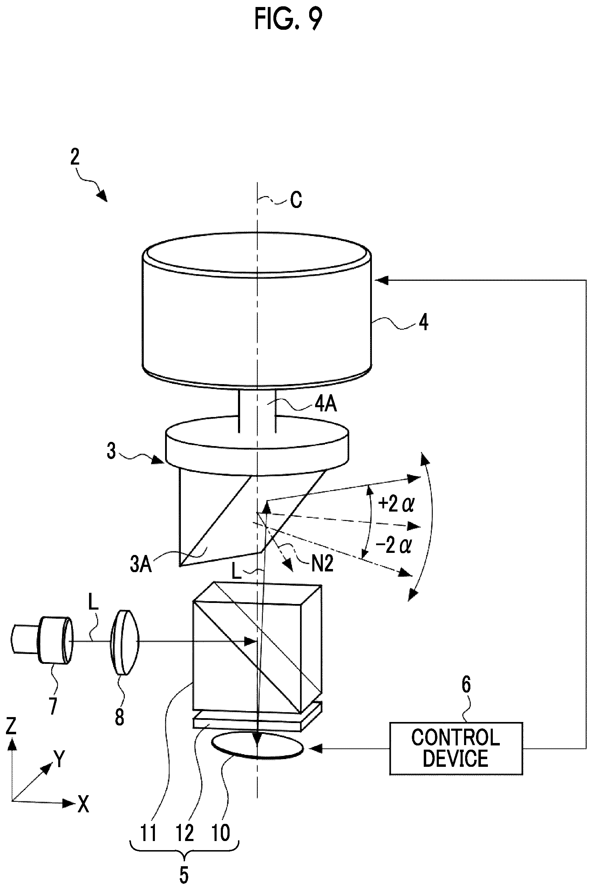

In the present modification example, as shown in Fig. 9, reciprocating scanning with the laser light L is performed within a range of ±2α in the vertical direction.

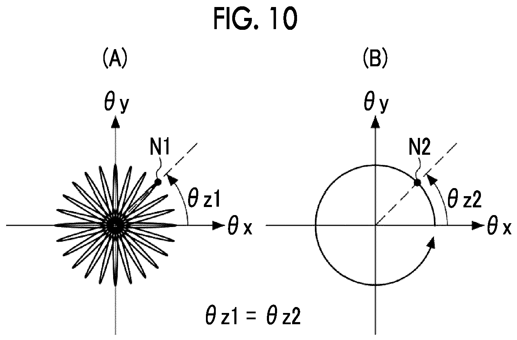

Fig. 10 shows an example of a change over time in the normal direction in a case of performing reciprocating scanning with the laser light L in the vertical direction while performing scanning with the laser light L in the entire circumferential direction. (A) of Fig. 10 shows a change over time in the normal direction of the two-axis scanner mirror 10. (B) of Fig. 10 shows a change over time in the normal direction of the rotary light-projecting mirror 3.

In the present modification example, the control device 6 controls the two-axis scanner mirror 10 so that the angle formed by the direction of the normal line N1 and the rotation axis C changes within a range of ±α in a state in which the rotary light-projecting mirror 3 is rotated and θz1 = θz2. That is, the control device 6 controls the two-axis scanner mirror 10 so that the normal line N1 swings in the plane including the rotation axis C and the normal line N2.

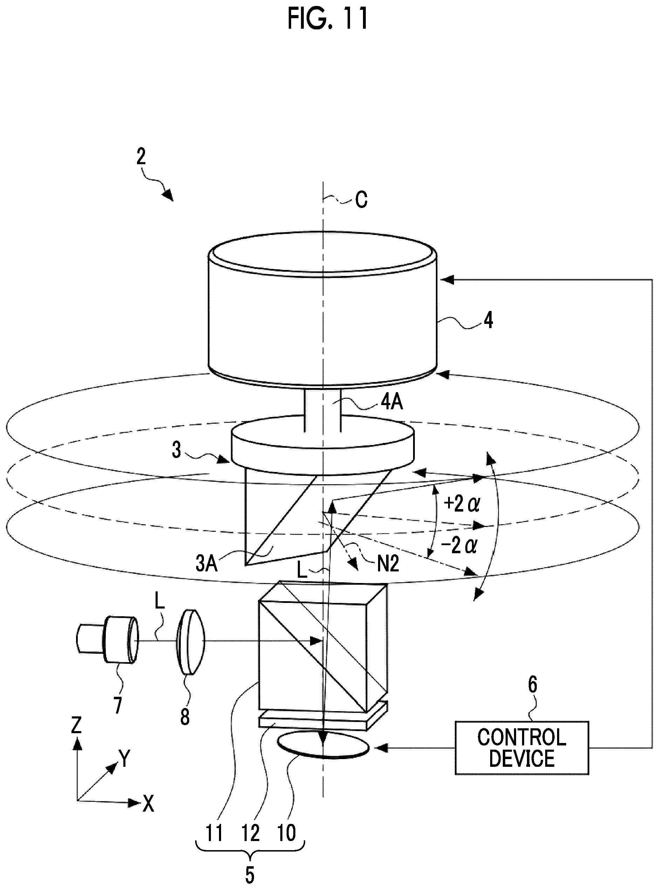

In the present modification example, as shown in Fig. 11, scanning with the laser light L is performed in the entire circumferential direction, and reciprocating scanning with the laser light L is performed within a range of ±2α in the vertical direction.

In the present modification example, the control device 6 swings the direction of the normal line N1 while causing the movable mirror 20 of the two-axis scanner mirror 10 to perform precession, so that, as shown in (A) of Fig. 10, the swing direction of the normal line N1 may deviate from the plane including the rotation axis C and the normal line N2. On the other hand, the control device 6 can set the swing direction of the normal line N1 to be in the plane including the rotation axis C and the normal line N2 by correcting a drive voltage applied to the two-axis scanner mirror 10.

### [Second Embodiment]

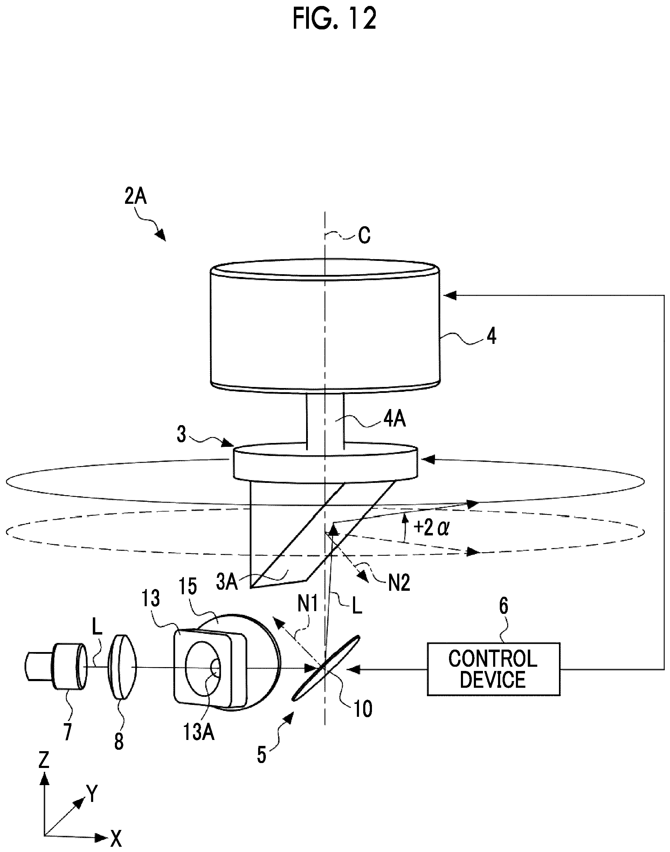

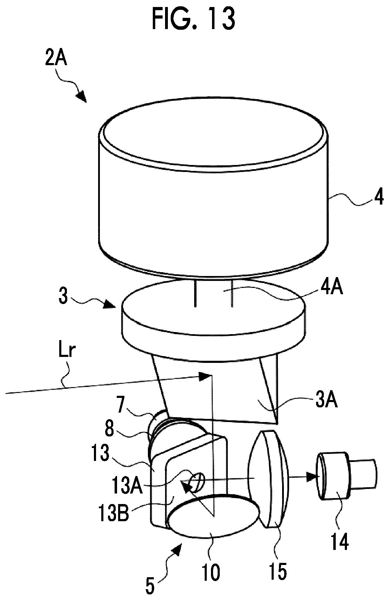

Next, a second embodiment will be described. Figs. 12 and 13 show a schematic configuration of an optical scanning device 2A according to the second embodiment. The optical scanning device 2Ais not provided with the beam splitter 11 and the λ/4 phase difference plate 12. That is, in the present embodiment, the light deflection device 5 is composed of only the two-axis scanner mirror 10. The two-axis scanner mirror 10 is inclined with respect to the rotation axis C such that incidence light from the light source 7 is deflected and emitted toward the reflecting surface 3A of the rotary light-projecting mirror 3 as deflected light. In a state in which the two-axis scanner mirror 10 is not driven, the angle formed by the normal line N1 and the rotation axis C is, for example, 45°.

In the present embodiment, the optical scanning device 2A comprises a holed mirror 13, a light-receiving element 14, and a light-receiving lens 15, and is configured as a three-dimensional scanner sensor such as a LiDAR device. The holed mirror 13 has a hole 13A through which the incidence light from the light source 7 passes and is incident on the two-axis scanner mirror 10. The holed mirror 13 is disposed between the collimator lens 8 and the two-axis scanner mirror 10.

The laser light L emitted from the light source 7 passes through the hole 13A of the holed mirror 13 via the collimator lens 8 and is incident on the two-axis scanner mirror 10 at an incidence angle of 45°. The laser light L incident on the two-axis scanner mirror 10 is reflected by the movable mirror 20 and is incident on the reflecting surface 3A of the rotary light-projecting mirror 3.

In the present embodiment as well, the control device 6 controls the light deflection device 5 so that the incidence light from the light source 7 is deflected in the plane including the rotation axis C and is incident on the reflecting surface 3A as deflected light. In addition, the control device 6 controls the motor 4 so that the normal line N2 of the reflecting surface 3A is included in the plane. The scanning method is the same as that of the first embodiment or each modification example of the first embodiment.

The light-receiving element 14 receives return light Lr that is emitted from the optical scanning device 2A to an outside of the device and that returns by being reflected by an object. Specifically, the return light Lr is reflected by the reflecting surface 3A and is incident on the two-axis scanner mirror 10. The light-receiving element 14 receives the return light Lr reflected by a reflecting surface 13B around the hole 13A of the holed mirror 13 after being reflected by the two-axis scanner mirror 10, via the light-receiving lens 15. The light-receiving element 14 is a photodiode, an avalanche photodiode (APD), a single-photon avalanche diode (SPAD), or the like.

Since the optical scanning device 2A according to the present embodiment does not comprise the beam splitter 11 and the λ/4 phase difference plate 12, the size of the optical scanning device 2A can be further reduced. In addition, since the return light Lr is guided to the light-receiving element 14 using the holed mirror 13, an influence of stray light caused by the laser light L other than the return light Lr can be suppressed as compared with a case in which the return light Lr is guided to the light-receiving element 14 using a half mirror or the like.

In the present embodiment, the return light Lr is guided to the light-receiving element 14 using the holed mirror 13, but the return light Lr may be guided to the light-receiving element 14 using a beam splitter instead of the holed mirror 13.

In addition, the holed mirror 13, the light-receiving element 14, and the light-receiving lens 15 of the present embodiment can be applied to the first embodiment, whereby it is also possible to configure the optical scanning device 2 according to the first embodiment as a three-dimensional scanner sensor.

### [Third Embodiment]

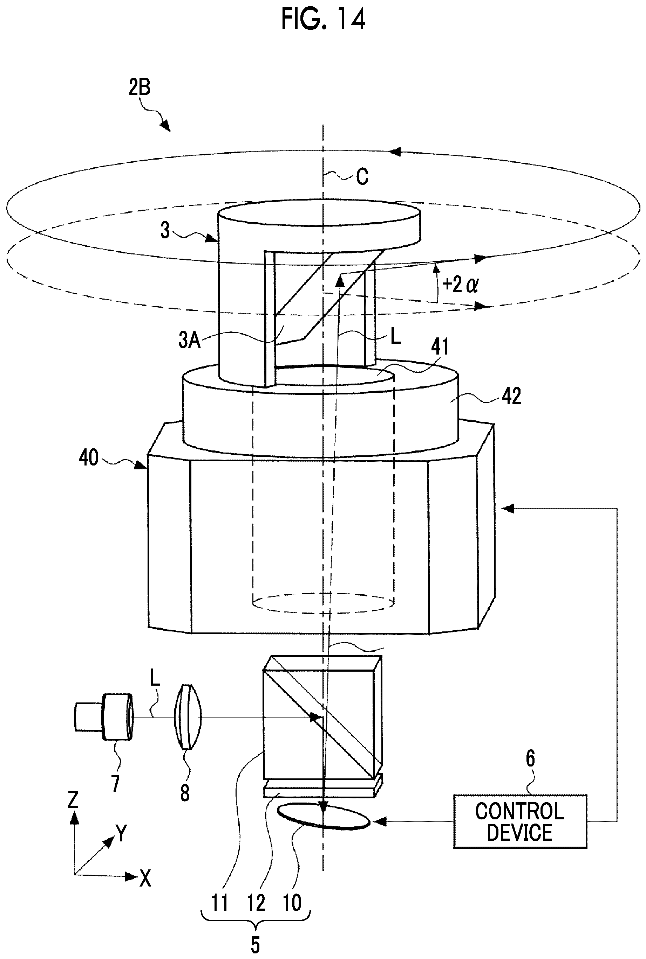

Next, a third embodiment will be described. Fig. 14 shows a schematic configuration of an optical scanning device 2B according to the third embodiment. The optical scanning device 2B is different from the optical scanning device 2 according to the first embodiment only in that a hollow motor 40 is provided instead of the motor 4.

The hollow motor 40 has a through hole 41 and is disposed between the rotary light-projecting mirror 3 and the light deflection device 5. The rotary light-projecting mirror 3 is attached to a rotating portion 42 of the hollow motor 40. The laser light L emitted as the deflected light from the light deflection device 5 passes through the through hole 41 and is incident on the reflecting surface 3A of the rotary light-projecting mirror 3.

The operations of the hollow motor 40 and the two-axis scanner mirror 10 are controlled by the control device 6. The scanning method is the same as that of the first embodiment or each modification example of the first embodiment.

In the present embodiment, since the hollow motor 40 is provided on the light deflection device 5 side of the rotary light-projecting mirror 3, there is an advantage in that the electrical connection from the control device 6 to the hollow motor 40 does not block the laser light L emitted from the rotary light-projecting mirror 3.

In the first and second embodiments, since the motor 4 is provided on a side of the rotary light-projecting mirror 3 opposite to the light deflection device 5, the electrical connection from the control device 6 to the motor 4 may block the laser light L emitted from the rotary light-projecting mirror 3. However, in a case in which scanning with the laser light L is performed in a range of less than 360° in the circumferential direction, there is no problem. In addition, the electrical connection can be achieved without blocking the laser light L by using a noncontact power supply method, using a transparent electrode, and the like.

### [Fourth Embodiment]

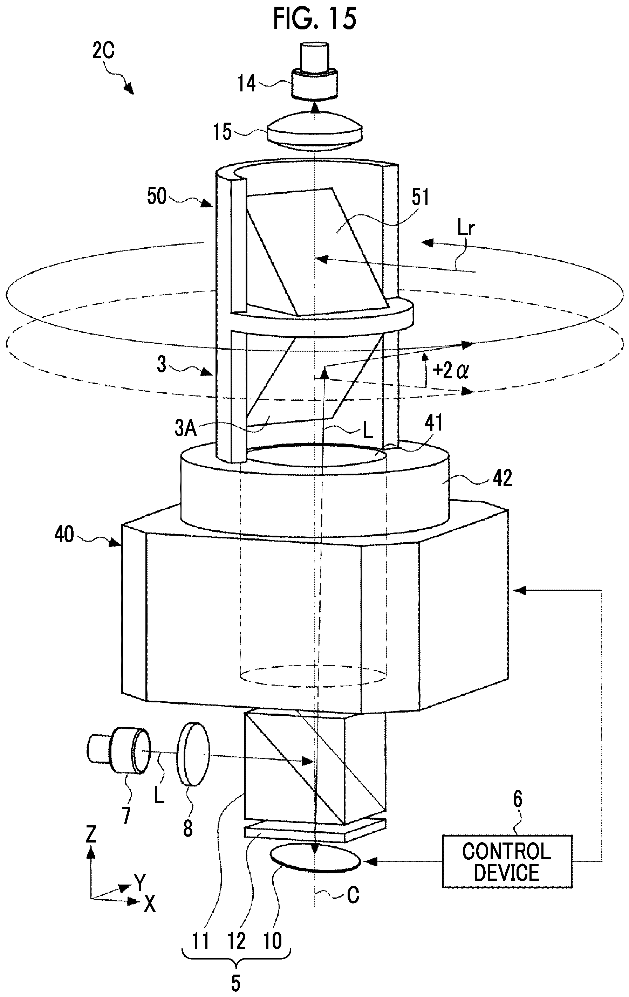

Next, a fourth embodiment will be described. Fig. 15 shows a schematic configuration of an optical scanning device 2C according to the fourth embodiment. The optical scanning device 2C comprises a rotary light-receiving mirror 50, a light-receiving element 14, and a light-receiving lens 15 in addition to the configuration of the optical scanning device 2B according to the third embodiment.

The rotary light-receiving mirror 50 is connected to a side of the rotary light-projecting mirror 3 opposite to the hollow motor 40 and rotates about the rotation axis C together with the rotary light-projecting mirror 3. The rotary light-receiving mirror 50 has a reflecting surface 51 inclined with respect to the rotation axis C. The rotary light-receiving mirror 50 is disposed such that a normal line of the reflecting surface 51 is included in the plane including the rotation axis C and the normal line N2.

The reflecting surface 51 reflects return light Lr that is emitted from the optical scanning device 2C to the outside of the device and that returns by being reflected by an object. The rotary light-receiving mirror 50 is an example of a "rotary light-receiving element" according to the technology of the present disclosure.

The light-receiving element 14 and the light-receiving lens 15 are disposed on the rotation axis C. The light-receiving element 14 receives the return light Lr reflected by the reflecting surface 51 via the light-receiving lens 15.

The operations of the hollow motor 40 and the two-axis scanner mirror 10 are controlled by the control device 6. The scanning method is the same as that of the first embodiment or each modification example of the first embodiment.

In the present embodiment, since the projection of the rotary light-projecting mirror 3 and the light reception of the rotary light-receiving mirror 50 are performed on different optical axes, the light-receiving element 14 does not receive the laser light L. That is, the influence of the stray light generated by the laser light L other than the return light Lr on the light-receiving element 14 is further suppressed.

### [Fifth Embodiment]

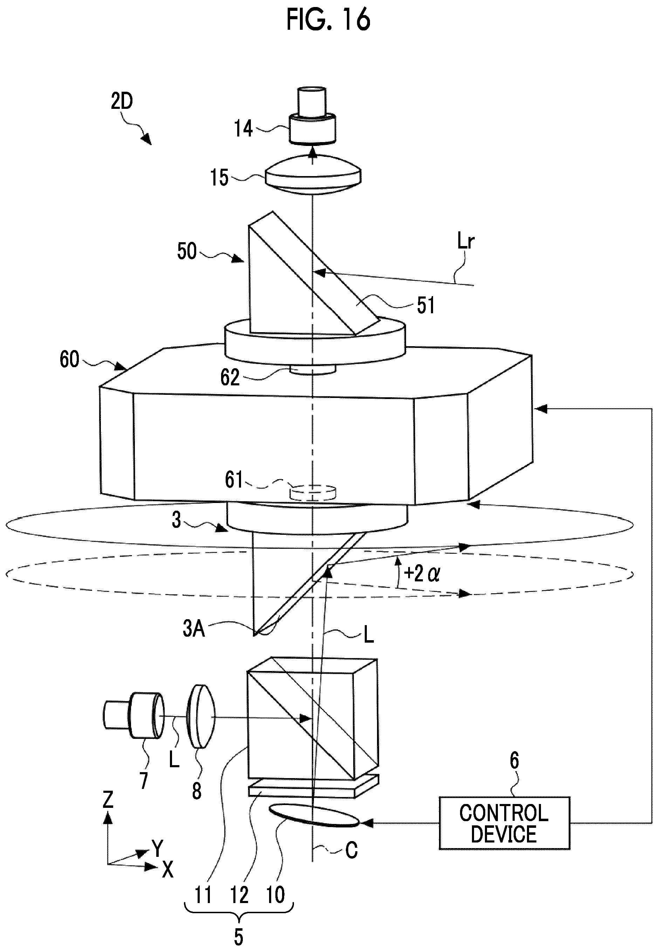

Next, a fifth embodiment will be described. Fig. 16 shows a schematic configuration of an optical scanning device 2D according to the fifth embodiment. The optical scanning device 2D is different from the optical scanning device 2 according to the first embodiment only in that a double-axis motor 60 is provided instead of the motor 4. In addition, the optical scanning device 2D comprises a rotary light-receiving mirror 50, a light-receiving element 14, and a light-receiving lens 15 as in the fourth embodiment.

The double-axis motor 60 has a first drive shaft 61 and a second drive shaft 62 along the rotation axis C. The first drive shaft 61 is disposed on the light deflection device 5 side of the double-axis motor 60. The second drive shaft 62 is disposed on a side of the double-axis motor 60 opposite to the light deflection device 5. The rotary light-projecting mirror 3 is connected to the first drive shaft 61. The rotary light-receiving mirror 50 is connected to the second drive shaft 62.

By driving the double-axis motor 60, the rotary light-receiving mirror 50 rotates about the rotation axis C together with the rotary light-projecting mirror 3. As in the fourth embodiment, the rotary light-receiving mirror 50 is disposed such that the normal line of the reflecting surface 51 is included in the plane including the rotation axis C and the normal line N2.

The operations of the double-axis motor 60 and the two-axis scanner mirror 10 are controlled by the control device 6. The scanning method is the same as that of the first embodiment or each modification example of the first embodiment.

In the present embodiment, since the double-axis motor 60 is used, a thickness of the optical scanning device 2D in the Z axis direction can be reduced. Accordingly, a distance between the two-axis scanner mirror 10 and the rotary light-receiving mirror 50 can be shortened.

### [Sixth Embodiment]

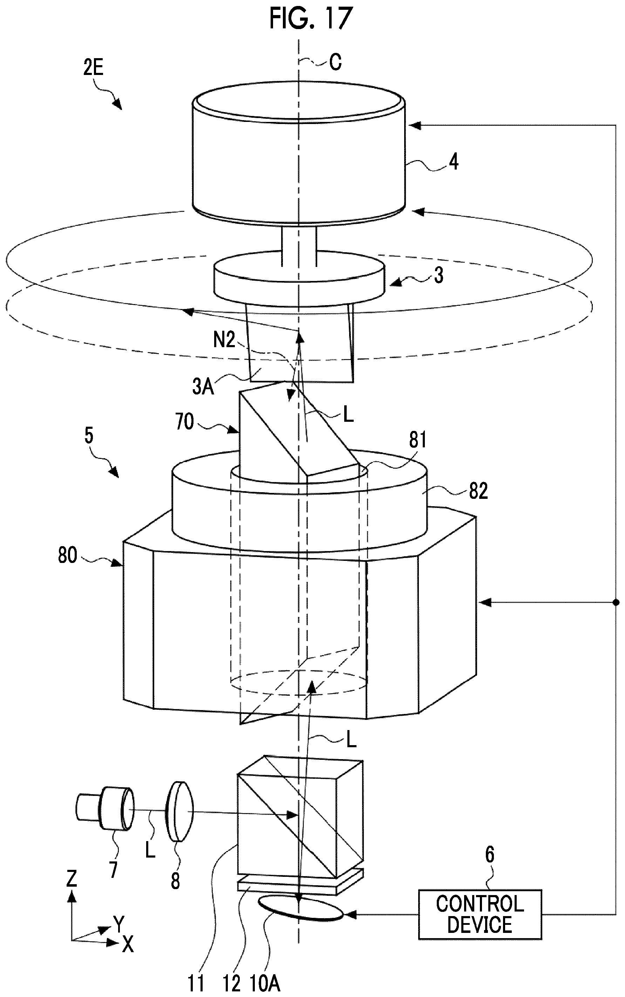

Next, a sixth embodiment will be described. Fig. 17 shows a schematic configuration of an optical scanning device 2E according to the sixth embodiment. The optical scanning device 2E comprises a one-axis scanner mirror 10A instead of the two-axis scanner mirror 10. In addition, an image rotator prism 70 and a hollow motor 80 are added to the optical scanning device 2E. In the present embodiment, the light deflection device 5 is composed of the one-axis scanner mirror 10A, the beam splitter 11, the λ/4 phase difference plate 12, the image rotator prism 70, and the hollow motor 80.

The one-axis scanner mirror 10A is configured such that the normal direction swings in a direction orthogonal to the rotation axis C. For example, the one-axis scanner mirror 10A is a MEMS mirror in which the normal direction swings in the X axis direction as a result of the movable mirror 20 swinging around the axis a₂.

The hollow motor 80 has a through hole 81 and is disposed between the rotary light-projecting mirror 3 and the light deflection device 5. The image rotator prism 70 is disposed in the through hole 81 and is attached to a rotating portion 82 of the hollow motor 80. The laser light L emitted as deflected light from the light deflection device 5 is incident into one end of the image rotator prism 70 and is emitted from the other end of the image rotator prism 70. The laser light L emitted from the other end of the image rotator prism 70 is incident on the reflecting surface 3A of the rotary light-projecting mirror 3.

The image rotator prism 70 is a double prism that rotates the direction of the incident laser light L about the rotation axis C. The hollow motor 80 rotates the image rotator prism 70 about the rotation axis C. In a case in which the image rotator prism 70 rotates, the direction of the laser light L rotates at an angular velocity that is twice that of the image rotator prism 70.

In the present embodiment, the one-axis scanner mirror 10A deflects the laser light L in one axial direction, and the image rotator prism 70 rotates the direction of the laser light L deflected by the one-axis scanner mirror 10A, thereby deflecting the laser light L in two axial directions.

The operations of the motor 4, the hollow motor 80, and the one-axis scanner mirror 10A are controlled by the control device 6. In the present embodiment, the control device 6 rotates the rotary light-projecting mirror 3 at an angular velocity that is twice that of the image rotator prism 70. As a result, the laser light L emitted as deflected light from the image rotator prism 70 can be incident on the reflecting surface 3A along the plane including the rotation axis C and the normal line N2 while the rotary light-projecting mirror 3 is rotated.

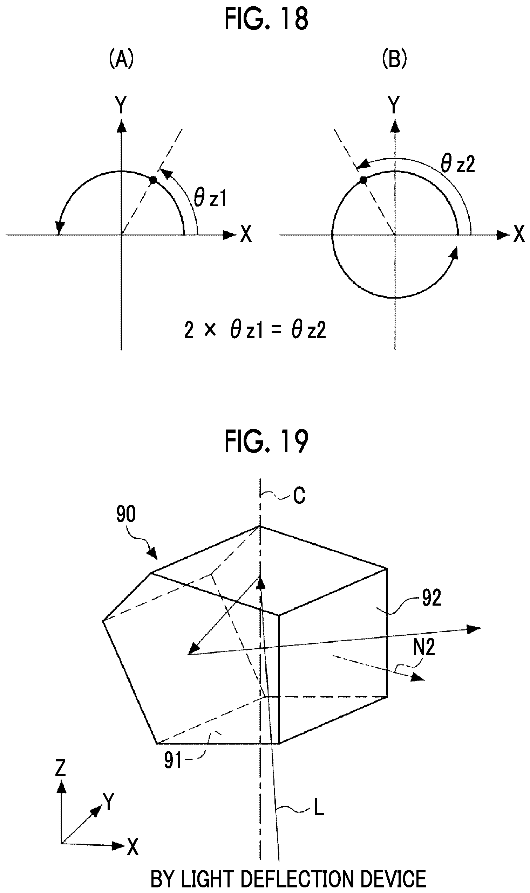

Fig. 18 shows an example of a change over time in a rotation angle in a case in which scanning with the laser light L is performed in the entire circumferential direction. (A) of Fig. 18 shows a change over time of a rotation angle of the image rotator prism 70. (B) of Fig. 18 shows a change over time of a rotation angle of the rotary light-projecting mirror 3. In the present embodiment, θz1 represents an angle θz of the image rotator prism 70 around the Z axis. θz2 represents an angle θz of the rotary light-projecting mirror 3 around the Z axis.

In the example shown in Fig. 18, the motor 4 and the hollow motor 80 are controlled to drive such that a relationship of 2 × θz1 = θz2 is maintained in a state in which the angle formed by the rotation axis C and the normal line N1 is constant without swinging the one-axis scanner mirror 10A. As a result, scanning with the laser light L is performed in the entire circumferential direction.

Further, by swinging the one-axis scanner mirror 10A, scanning with the laser light L can be performed in the entire circumferential direction and reciprocating scanning with the laser light L can be performed in the vertical direction.

In the present embodiment, three-dimensional optical scanning can be performed using the one-axis scanner mirror 10A having a simple configuration.

### [Other Embodiments]

In each of the above-described embodiments, the rotary light-projecting mirror 3 is used as the rotary light-projecting element, but a pentaprism can be used instead of the rotary light-projecting mirror 3.

Fig. 19 shows an example of a pentaprism. As shown in Fig. 19, a pentaprism 90 deflects the incident laser light L by 90° and emits the laser light L. Specifically, the pentaprism 90 has a light incident surface 91 and a light emitting surface 92. The laser light L emitted as deflected light from the light deflection device 5 is incident on the light incident surface 91. The laser light L incident on the light incident surface 91 is reflected twice inside the pentaprism 90 and is emitted from the light emitting surface 92.

The light deflection device 5 deflects the laser light L in a plane including the rotation axis C and makes the deflected light incident on the light incident surface 91. The pentaprism 90 rotates about the rotation axis C such that the normal line N2 of the light emitting surface 92 is included in the plane.

As described above, the rotary light-projecting mirror 3 and the pentaprism 90 are both rotary light-projecting elements that can rotate about the rotation axis C and that emit incident light in different directions. In the present disclosure, the light deflection device 5 deflects incidence light from the light source 7 in a plane including the rotation axis C and causes the deflected light to be incident on the rotary light-projecting element. The control device 6 controls a rotary drive device such as the motor 4 such that a normal line of a surface through which light is emitted from the rotary light-projecting element (hereinafter, referred to as a light projection emitting surface) is included in the plane. In a case in which the rotary light-projecting element is the rotary light-projecting mirror 3, the light projection emitting surface is the reflecting surface 3A. In a case in which the rotary light-projecting element is the pentaprism 90, the light projection emitting surface is the light emitting surface 92.

In addition, a 45° right-angle prism can be used as the rotary light-projecting element. In this case, the right angle prism is disposed such that a reflecting surface forms an angle of 45° with the rotation axis C. In addition, a right angle prism having an angle other than 45° can also be used as the rotary light-projecting element.

The above-described embodiments and modification examples can be combined as appropriate as long as no contradiction occurs.

With the optical scanning device of the present disclosure, it is possible to perform scanning with light concentratedly in any limited range as long as the range is within an optical scanning possible range. In addition, in a case in which the optical scanning device according to the present disclosure is adapted to a device such as LiDAR or a radar, an effect of increasing resolution or increasing a scan rate by performing the optical scanning only in a range of interest is also expected.

All documents, patent applications, and technical standards mentioned in the present specification are incorporated herein by reference to the same extent as in a case in which each document, each patent application, and each technical standard are specifically and individually described by being incorporated by reference.

It is possible to grasp the following technologies by the above description.

### [Appendix 1]

An optical scanning device including:
a rotary light-projecting element that is rotatable about a rotation axis and that emits incidence light in different directions;
a rotary drive device that rotates the rotary light-projecting element;
a light deflection device that deflects incidence light from a light source into a plane including the rotation axis and that causes the deflected light to be incident on the rotary light-projecting element; and
a control device that controls the rotary drive device so that a normal line of a light projection emitting surface through which light is emitted from the rotary light-projecting element is included in the plane.

### [Appendix 2]

The optical scanning device according to Appendix 1,
in which the rotary light-projecting element is a rotary light-projecting mirror, and
the light projection emitting surface is a reflecting surface that is inclined with respect to the rotation axis and that reflects and emits the deflected light incident from the light deflection device.

### [Appendix 3]

The optical scanning device according to Appendix 2,
in which the rotary light-projecting element is a pentaprism, and
the light projection emitting surface is a light emitting surface that emits light incident from a light incident surface and deflected by reflection in the pentaprism.

### [Appendix 4]

The optical scanning device according to Appendix 1 or 2,
in which the light deflection device includes a two-axis scanner mirror whose normal direction swings, and
a normal line of the light projection emitting surface and a normal line of the two-axis scanner mirror are in the plane.

### [Appendix 5]

The optical scanning device according to Appendix 4,
in which the light deflection device includes a beam splitter that reflects the incidence light from the light source and causes the reflected light to be incident on the two-axis scanner mirror and that allows light reflected by the two-axis scanner mirror to pass therethrough and causes the reflected light to be incident on the rotary light-projecting element as the deflected light.

### [Appendix 6]

The optical scanning device according to Appendix 4 or 5,
in which the two-axis scanner mirror is inclined with respect to the rotation axis, reflects the incidence light from the light source, and causes the reflected light to be incident on the rotary light-projecting element as the deflected light.

### [Appendix 7]

The optical scanning device according to any one of Appendices 1 to 6, further including:
a light-receiving element that receives return light which is emitted from the rotary light-projecting element to an outside of the device and returns by being reflected by an object.

### [Appendix 8]

The optical scanning device according to Appendix 7, further including:
a holed mirror having a hole through which the incidence light from the light source passes and is incident on the light deflection device,
in which the light-receiving element receives the return light reflected around the holed mirror.

### [Appendix 9]

The optical scanning device according to any one of Appendices 1 to 8,
in which the rotary drive device is a hollow motor having a through hole and is disposed between the rotary light-projecting element and the light deflection device, and
the deflected light emitted from the light deflection device passes through the through hole and is incident on the rotary light-projecting element.

### [Appendix 10]

The optical scanning device according to any one of Appendices 1 to 9, further including:
a rotary light-receiving element that has a reflecting surface inclined with respect to the rotation axis and that rotates about the rotation axis together with the rotary light-projecting element; and
a light-receiving element that receives return light which is emitted from the rotary light-projecting element to an outside of the device, returns by being reflected by an object, and then is reflected by the rotary light-receiving element.

### [Appendix 11]

The optical scanning device according to Appendix 10,
in which the rotary drive device is a double-axis motor having a first drive shaft and a second drive shaft extending along the rotation axis,
the rotary light-projecting element is connected to the first drive shaft, and
the rotary light-receiving element is connected to the second drive shaft.

### [Appendix 12]

The optical scanning device according to any one of Appendices 1 to 11,
in which the light deflection device is composed of
a one-axis scanner mirror whose normal direction swings in a direction orthogonal to the rotation axis,
an image rotator prism that rotates a direction of light reflected by the one-axis scanner mirror about the rotation axis, and
a hollow motor that has a through hole in which the image rotator prism is disposed and that rotates the image rotator prism about the rotation axis.

## Claims

1. An optical scanning device comprising:
a rotary light-projecting element that is rotatable about a rotation axis and that emits incidence light in different directions;
a rotary drive device that rotates the rotary light-projecting element;
a light deflection device that deflects incidence light from a light source into a plane including the rotation axis and that causes the deflected light to be incident on the rotary light-projecting element; and
a control device that controls the rotary drive device so that a normal line of a light projection emitting surface through which light is emitted from the rotary light-projecting element is included in the plane.

2. The optical scanning device according to claim 1,
wherein the rotary light-projecting element is a rotary light-projecting mirror, and
the light projection emitting surface is a reflecting surface that is inclined with respect to the rotation axis and that reflects and emits the deflected light incident from the light deflection device.

3. The optical scanning device according to claim 2,
wherein the rotary light-projecting element is a pentaprism, and
the light projection emitting surface is a light emitting surface that emits light incident from a light incident surface and deflected by reflection in the pentaprism.

4. The optical scanning device according to claim 1,
wherein the light deflection device includes a two-axis scanner mirror whose normal direction swings, and
a normal line of the light projection emitting surface and a normal line of the two-axis scanner mirror are in the plane.

5. The optical scanning device according to claim 4,
wherein the light deflection device includes a beam splitter that reflects the incidence light from the light source and causes the reflected light to be incident on the two-axis scanner mirror and that allows light reflected by the two-axis scanner mirror to pass therethrough and causes the reflected light to be incident on the rotary light-projecting element as the deflected light.

6. The optical scanning device according to claim 4,
wherein the two-axis scanner mirror is inclined with respect to the rotation axis, reflects the incidence light from the light source, and causes the reflected light to be incident on the rotary light-projecting element as the deflected light.

7. The optical scanning device according to claim 1, further comprising:
a light-receiving element that receives return light which is emitted from the rotary light-projecting element to an outside of the device and returns by being reflected by an object.

8. The optical scanning device according to claim 7, further comprising:
a holed mirror having a hole through which the incidence light from the light source passes and is incident on the light deflection device,
wherein the light-receiving element receives the return light reflected around the holed mirror.

9. The optical scanning device according to claim 1,
wherein the rotary drive device is a hollow motor having a through hole and is disposed between the rotary light-projecting element and the light deflection device, and
the deflected light emitted from the light deflection device passes through the through hole and is incident on the rotary light-projecting element.

10. The optical scanning device according to claim 1, further comprising:
a rotary light-receiving element that has a reflecting surface inclined with respect to the rotation axis and that rotates about the rotation axis together with the rotary light-projecting element; and
a light-receiving element that receives return light which is emitted from the rotary light-projecting element to an outside of the device, returns by being reflected by an object, and then is reflected by the rotary light-receiving element.

11. The optical scanning device according to claim 10,
wherein the rotary drive device is a double-axis motor having a first drive shaft and a second drive shaft extending along the rotation axis,
the rotary light-projecting element is connected to the first drive shaft, and
the rotary light-receiving element is connected to the second drive shaft.

12. The optical scanning device according to claim 1,
wherein the light deflection device is composed of
a one-axis scanner mirror whose normal direction swings in a direction orthogonal to the rotation axis,
an image rotator prism that rotates a direction of light reflected by the one-axis scanner mirror about the rotation axis, and
a hollow motor that has a through hole in which the image rotator prism is disposed and that rotates the image rotator prism about the rotation axis.
